Europäisches Patentamt

European Patent Office

Office européen des brevets

(11) Veröffentlichungsnummer: **0 069 383**
A1

# EUROPÄISCHE PATENTANMELDUNG

(21) Anmeldenummer: 82106011.8

(22) Anmeldetag: 06.07.82

(51) Int. Cl.³: **C 21 D 1/09**

(30) Priorität: 08.07.81 DE 3126953

(43) Veröffentlichungstag der Anmeldung:
12.01.83 Patentblatt 83/2

(84) Benannte Vertragsstaaten:
DE FR GB IT

(71) Anmelder: Arnold, Peter, Dr.
Westendstrasse 11
D-8000 München 2(DE)

(72) Erfinder: Arnold, Peter, Dr.
Westendstrasse 11
D-8000 München 2(DE)

(72) Erfinder: Dausinger, Friedrich, Dr.
Steinenhausenstrasse 18
D-7000 Stuttgart(DE)

(72) Erfinder: Müller, Werner
Hermann-Essig-Strasse 106
D-7141 Schwieberdingen(DE)

(74) Vertreter: Röser, Peter (DE)
c/o Robert Bosch GmbH Robert-Bosch-Platz 1
D-7016 Gerlingen-Schillerhöhe(DE)

(54) Verfahren zur Oberflächenbehandlung von Werkstücken.

(57) Beschrieben wird ein Verfahren zur Oberflächen behandlung, insbesondere metallischer Werkstücke, mittels Laserstrahlen.

Nach dem neuen Verfahren wird der absorbierte Anteil (Ea) der eingestrahlten Energie (Ee) dadurch erhöht, daß linear polarisiertes Licht bestimmter Richtung relativ zur Einfallsebene des Strahls verwendet wird, und der Laserstrahl die zu behandelnde Oberfläche schräg beaufschlagt. Bei Eisen- bzw. Stahloberflächen hat sich ein Einfallswinkel von >70° zwischen dem Strahl und der Senkrechten auf die zu behandelnde Oberfläche als Optimum erwiesen. Bei Einhaltung der erfindungsgemäßen Strahlgeometrie können Werte für den absorbierten Energieanteil erreicht werden, die mindestens denen entsprechen, die mit einer absorbierenden Beschichtung erreicht werden.

Fig. 1

Die Erfindung betrifft ein Verfahren zur Oberflächenbehandlung von Werkstücken mittels eines Laserstrahles, wobei Laserstrahl und/oder Werkstück so geführt werden, daß der Laserstrahl auf die zu behandelnde Oberfläche einwirkt.

Mit der Einführung von Leistungslasern sind neue Verfahren bekannt geworden, die Oberfläche von Werkstoffen mit Laserstrahlen zu behandeln. Die Laserstrahlung wird dabei teilweise absorbiert, die Oberfläche erhitzt sich und die darunterliegenden Partien der Oberfläche werden bedingt durch die Wärmeleitung des Materials miterhitzt. Je nach Leistungsdichte der Laserstrahlung und Einwirkungsdauer wird das Material glühend, flüssig oder verdampft. Die technisch entsprechenden Verfahren sind im ersteren Fall das Härten bzw. Vergüten metallischer Oberflächen, im zweiten Fall das Oberflächenumschmelzen, d.h. umlegieren oder Auftragen zusätzlicher Legierungselemente, sowie das Verschweißen. Der dritte Fall würde das Trennen bzw. Durchschneiden von Materialien betreffen.

In der Mehrzahl dieser Fälle wird der Strahl und das Werkstück relativ zueinander bewegt, d.h. der Strahl tastet eine Spur auf der Oberfläche des Werkstückes ab, wobei eingestrahlte Energie und Vorschubgeschwindigkeit so gewählt werden, daß die erforderliche Prozesstemperatur erreicht wird.

...

Besonders beim Vergüten bzw. Härten metallischer Oberflächen wird das Laserverfahren mit Erfolg eingesetzt. Dabei wird die Oberfläche durch den Laserstrahl zur gewünschten Transformationstemperatur erwärmt. Da der Strahl weiterwandert, wird die eben noch erhitzte Oberfläche im nächsten Augenblick nicht mehr vom Strahl beleuchtet und durch die hohe Wärmeleitfähigkeit des Metalls wird die eben erwärmte Schicht aufgrund der darunterliegenden kühleren Schichten schlagartig abgekühlt. Typischerweise werden dabei, beispielsweise mit einem $CO_2$-Laser, Härtetiefen bis zu 1 mm erreicht. Die Vorteile der Wärmebehandlung von Oberflächen mit Laserstrahlen liegen hauptsächlich darin, daß der Strahl trägheitslos leicht in Ecken und Winkel des Werkstückes gelenkt werden kann. Die Oberfläche kann auch punktuell bzw. lokal begrenzt behandelt werden und damit nur dort gehärtet, wo entsprechende Belastungen auftreten. Die Wärmebelastung des gesamten Materials ist dabei gering, so daß kein wie bei anderen Härteverfahren gefürchteter Verzug des Werkstückes auftritt. Bei allen bekannten und technisch eingesetzten Verfahren wird der Strahl eines Leistungslasers senkrecht auf die Oberfläche geführt. Die Reflektion von metallischen Oberflächen ist bei diesem Verfahren sehr hoch. Bei Bestrahlung einer metallischen Eisenoberfläche mit einem $CO_2$-Laser liegt typischerweise der von der Oberfläche wieder zurückreflektierte Anteil der Strahlung bei etwa 95%, d.h. nur die restlichen 5% werden vom Werkstück absorbiert und in Wärme umgewandelt. Um dieses Ergebnis zu verbessern, ist es bekannt,

...

die zu bearbeitende Oberfläche mit einer speziellen Beschichtung zu versehen, welche die Absorption der Laserstrahlung erhöht. Als Beschichtungen kommen dabei Farbanstriche, Phosphatieren, Brünieren u.a. in Frage.

Die erwähnte, spezielle Beschichtung erhöht zwar das Absorptionsvermögen, stellt aber im weiteren Fertigungsverlauf eine unerwünschte Belastung dar, da sie zunächst aufgebracht und auch wieder entfernt werden muß. Da sich die aufgebrachte Oberflächenbeschichtung je nach Oberfläche einbrennt oder auch mit dem Material verschmilzt, ist ein solches Entfernen mit großen Schwierigkeiten verbunden oder auch unmöglich. Für bestimmte Anwendungen kommt daher eine solche Oberflächenbeschichtung nicht in Frage. Insbesondere bei bereits fertig bearbeiteten und geschliffenen Teilen, die für eine punktuelle Oberflächenbehandlung mit Laser ideal geeignet sind, ist der zusätzliche Auftrag einer absorbierenden Beschichtung nicht mehr möglich.

Demgemäß liegt der Erfindung die Aufgabe zugrunde, das eingangs bezeichnete Verfahren derart weiterzubilden, daß der absorbierte Anteil der eingestrahlten Energie erhöht wird, ohne daß jedoch die Oberfläche mit einer speziellen Beschichtung versehen werden muß.

Erfindungsgemäß wird diese Aufgabe durch die im Hauptanspruch angegebenen Verfahrensschritte gelöst.

...

Dabei wird von der aus der Grundlagenforschung bereits bekannten Gesetzmäßigkeit Gebrauch gemacht, daß der Anteil linear polarisierten Lichtes, der von einer bestimmten Oberfläche absorbiert wird, als Funkton des Einfallswinkels und der Richtung des Polarisationsvektors zur Einfallsebene des Strahls ein Maximum durchläuft. Die Anwendung dieser schon seit längerer Zeit bekannten Gesetzmäßigkeit auf die Oberflächenbehandlung von Werkstücken mittels Laserstrahlen führt zu dem überraschenden Ergebnis, daß bei Einhalten eines optimalen Einfallswinkels und Verwendung linear polarisierten Lichtes bestimmter Richtung zur Einfallsebene, der absorbierte Energieanteil so groß wird, daß auf eine zusätzliche Beschichtung der Oberfläche in der Regel verzichtet werden kann. So wurde beispielsweise festgestellt, daß bei der Bestrahlung einer Eisenoberfläche mit einem $CO_2$-Laser unter einem Einstrahlwinkel $> 70°$ der absorbierte Anteil der eingestrahlten Energie etwa 50% beträgt. Die Polarisationsrichtung in diesem Fall war parallel zur Einfallsebene, wobei die Einfallsebene als Ebene zwischen dem einfallenden Strahl und dem Lot bzw. der Senkrechten auf die zu behandelnde Oberfläche definiert ist.

Die Vorteile des erfindungsgemäßen Verfahrens liegen klar auf der Hand, durch das Wegfallen einer besonderen Beschichtung kann beispielsweise eine punktuelle Härtung bereits fertig bearbeiteter und polierter Teile vorgenommen werden. Die höhere Wirtschaftlichkeit derartiger Härteverfahren schlägt insbesondere bei Massenartikeln, wie sie von der Automobilindustrie benötigt werden, positiv zu Buche.

...

Das erfindungsgemäße Verfahren ist aber auch bei allen anderen Oberflächenbehandlungen von Vorteil, da es generell den Anteil der absorbierten Energie und damit die Effizienz erhöht. Auch bei anderen als metallischen Oberflächen kann das Verfahren vorteilhaft angewandt werden. Durch eine einfache Versuchsreihe muß lediglich der optimale Einfallswinkel und die Vorzugsrichtung des Polarisationsvektors festgestellt werden.

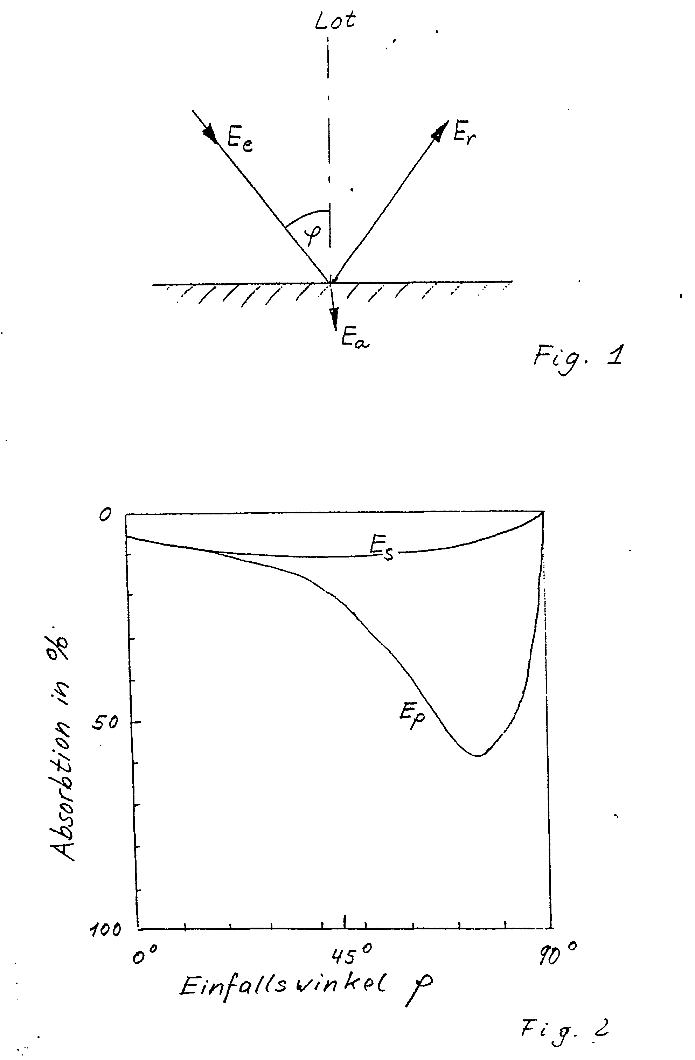

Anhand der beigefügten Zeichnung sind die geometrischen Verhältnisse und die Auswirkung der Polarisierung näher erläutert. In Fig. 1 ist mit $E_e$ der unter dem Winkel $\varphi$ einfallende Laserstrahl und mit $E_r$ der von der zu behandelnden Oberfläche reflektierte Laserstrahl angedeutet. Der Pfeil $E_a$ deutet den vom Material absorbierten Energieanteil an. Es gilt die Bedingung

$$E_e = E_r + E_a.$$

Wie vorstehend bereits ausgeführt, beträgt der optimale Einfallswinkel $\varphi$ bei Eisenoberflächen $> 70°$. Der absorbierte Energieanteil erreicht dabei eine Größe von etwa 50%, was etwa den Werten entspricht, die mit speziellen Beschichtungen erreicht werden. In Fig. 2 ist qualitativ der Einfluß der linearen Polarisierung des Laserstrahles wiedergegeben. Auf der Ordinate ist der absorbierte Energieanteil in Prozent aufgetragen, auf der Abszisse ist der Einfallswinkel $\varphi$, wie in Fig. 1 definiert, aufgetragen. Die Kurve $E_s$ gibt für den Fall der Bestrahlung einer Eisenoberfläche mit senkrecht zur Einfallsebene polarisiertem Licht den absorbierten Energieanteil

...

wieder, während die Kurve $E_p$ die gleiche Abhängigkeit für parallel zur Einfallsebene polarisiertes Licht wiedergibt. Die Einfallsebene ist dabei als die zwischen dem Strahl und dem Lot auf die zu behandelnde Oberfläche aufgespannte Ebene definiert. Es zeigt sich bei Parallelpolarisation ein ausgeprägtes Maximum des absorbierten Energieanteils bei einem Einfallswinkel von etwa 80°. Die angegebenen Zusammenhänge variieren selbstverständlich je nach Bearbeitungsverfahren und Materialeigenschaften, wie Rauhigkeit, Dicke der Oxidschicht, Oberflächentemperatur u.a. Eine Optimierung ist jedoch für den Fachmann bei Anwendung der erfindungsgemäßen Lehre ohne Schwierigkeiten durchzuführen. Das erfindungsgemäße Verfahren bezieht sich zunächst auf die im Bereich der Metallbearbeitung besonders geeigneten $CO_2$-Laser. Die Anwendung anderer Laser ist jedoch prinzipiell ebenfalls möglich.

...

R. 17792 Pf

<u>P a t e n t a n s p r ü c h e</u>

1. Verfahren zur Oberflächenbehandlung von Werkstücken mittels eines Laserstrahles, wobei Laserstrahl und/oder Werkstück so geführt werden, daß der Laserstrahl auf die zu behandelnde Oberfläche einwirkt, dadurch g e k e n n - z e i c h n e t, daß der Laserstrahl linear polarisiert wird und der Einfallswinkel zwischen Strahl und der Senkrechten auf die zu behandelnde Oberfläche und die Richtung des Polarisationsvektors so gewählt wird, daß das Verhältnis von absorbierter zu reflektierter Energie ein Maximum wird.

. . .

**0069383**

2. Verfahren nach Anspruch 1, dadurch  g e k e n n -
z e i c h n e t , daß die Richtung des Polarisationsvektors etwa parallel zur Einfallsebene des Laserstrahles gerichtet wird.

3. Verfahren nach Anspruch 2, dadurch  g e k e n n -
z e i c h n e t , daß bei der Behandlung von Eisen-
bzw. Stahloberflächen als Einfallswinkel des Laserstrahles ein Winkel $> 45°$ gewählt werden.

. . .

1/1

0069383

Lot

$E_e$ $E_r$

$\varphi$

$E_a$

Fig. 1

Absorbtion in %

$E_s$

$E_p$

$0^\circ$    $45^\circ$    $90^\circ$

Einfallswinkel $\varphi$

Fig. 2

Europäisches
Patentamt

# EUROPÄISCHER RECHERCHENBERICHT

EP 82 10 6011.8

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| ˙Y. | M. BORN "Optik" 3 Auflage, 1972, Springer-Verlag, Berlin-Heidelberg-New York Seiten 261 bis 267 ; * Seite 264 * -- | 1 | C 21 D 1/09 |
| Y | DVS-BERICHTE, Band 63, 1980 Düsseldorf F.O. OLSEN : "Cutting with Polarized Laser Beams" * Seiten 197 bis 200 * -- | 1 | |
| A | WELDING AND METAL FABRICATION Band 47, Nr. 8, Oktober 1979, Guildford G. SAYEGH et al. : "The Laser's Position in the Industrial Marketplace" Seiten 567 bis 575 -- | | **RECHERCHIERTE SACHGEBIETE (Int Cl.³)** C 21 D 1/09 |
| A | DE - A - 2 319 776 (PIERRES HOLDING) -- | | |
| A | DE - A1 - 2 430 994 (LASAG) -- | | |
| A | DE - A1 - 2 927 153 (SUMITOMO METAL INDUSTRIES) -- | | |
| A | Patent Abstracts of Japan Band 4, Nr. 174, 2. Dezember 1980 & JP - A - 55 - 115920 ---- | | |

**KATEGORIE DER GENANNTEN DOKUMENTE**

X: von besonderer Bedeutung allein betrachtet
Y: von besonderer Bedeutung in Verbindung mit einer anderen Veroffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veroffentlicht worden ist
D: in der Anmeldung angeführtes Dokument
L: aus andern Gründen angefuhrtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 29-09-1982 | SUTOR |

EPA form 1503.1 06.78